# EUROPEAN PATENT SPECIFICATION

(11) **EP 3 505 609 B1**
(45) Date of publication and mention of the grant of the patent: **17.11.2021**
(21) Application number: 17382924.3
(22) Date of filing: 29.12.2017
(51) Int. Cl.: C11D 3/382, C11D 3/386, C11D 3/48, A01N 65/00

(54) **DETERGENT COMPOSITION FOR THE CONTROL AND REMOVAL OF BIOFILMS**
WASCHMITTELZUSAMMENSETZUNG ZUR KONTROLLE UND ENTFERNUNG VON BIOFILMEN
COMPOSITION DÉTERGENTE POUR LE CONTRÔLE ET L'ÉLIMINATION DE BIOFILMS

(43) Date of publication of application: 03.07.2019
(73) Proprietor: Itram Higiene, S.L., 08500 Vic (Barcelona) (ES)
(72) Inventor: OSSET HERNÁNDEZ, Miquel, 08500 Vic (ES); PORTET DANÉS, Bruna, 08500 Vic (ES); RIPOLLÉS ÁVILA, Carolina, 08500 Vic (ES); RODRÍGUEZ JEREZ, José Juan, 08500 Vic (ES); YLLA MONFORT, Irene, 08500 Vic (ES)
(74) Representative: Gallego Jiménez, José Fernando

(56) References cited:
- WO-A1-96/36569
- WO-A1-2016/198262
- WO-A1-2017/001472
- US-A1- 2017 355 932
- Elisabetta Buommino ET AL: "Recent Advances in Natural Product-Based Anti-Biofilm Approaches to Control Infections", Mini-Reviews in Medicinal Chemistry, 1 January 2014 (2014-01-01), pages 1169-1182, XP055484273, Retrieved from the Internet: URL:https://www.ingentaconnect.com/content one/ben/mrmc/2014/00000014/00000014/art000 08?crawler=true [retrieved on 2018-06-14]
- MITRA MOHAMMADI BAZARGANI ET AL: "Antibiofilm activity of essential oils and plant extracts against Staphylococcus aureus and Escherichia coli biofilms", FOOD CONTROL., vol. 61, 30 September 2015 (2015-09-30), pages 156-164, XP055451067, GB ISSN: 0956-7135, DOI: 10.1016/j.foodcont.2015.09.036
- M. SADEKUZZAMAN ET AL: "Current and Recent Advanced Strategies for Combating Biofilms : Strategies for combating biofilm...", COMPREHENSIVE REVIEWS IN FOOD SCIENCE AND FOOD SAFETY, vol. 14, no. 4, 4 June 2015 (2015-06-04), pages 491-509, XP055483254, US ISSN: 1541-4337, DOI: 10.1111/1541-4337.12144

## Description

### Technical Field

The present invention belongs to the field of surfaces hygiene and relates to a detergent composition for the control and removal of biofilms present thereon, which is based on the combination of a mannanase enzyme and a botanical active ingredient.

### Background art

A biofilm is an aggregate of microorganisms constituted by a population of cells growing adhered to each other, anchored to a surface, and embedded in a matrix of extracellular polymeric substances (or EPS) produced by the biofilm itself. EPS can contain polysaccharides, proteins, phospholipids, teichoic and nucleic acids, and other polymeric substances hydrated with up to 97% water.

The advantages provided by a biofilm to the life of microorganisms are numerous, mainly the availability of more stable environmental conditions, a reserve of nutrients, an anchorage point, and greater resistance to desiccation. Likewise, the biofilm also confers greater resistance to microorganisms against the action of disinfectants.

Therefore, in practice, a biofilm represents a barrier between microorganisms and disinfectants, antibiotics or biocides, so that their presence constitutes a major obstacle for cleaning and disinfection processes.

The biofilm can consist of monocultures of microorganisms, or of different species, as well as a mixture of phenotypes of a given species. The biofilm formation is not restricted to a specific group of microorganisms and nowadays it is considered that, under the suitable environmental conditions, all microorganisms are capable of forming biofilms on any type of surface.

Despite the fact that most bacterial species have the ability to form biofilms, some genera form them more easily and quickly than others, such as *Pseudomonas, Listeria, Enterobacter, Escherichia, Flavobacterium, Alcaligenes, Staphylococcus* and *Bacillus.* On the other hand, among the yeasts most commonly involved in biofilm formation is, for example, *Saccharomyces cerevisiae,* present in the wine industry.

The presence of biofilms has been established in wide variety of environments, among which it is worth noting the industrial facilities, where they generate multiple technological and hygienic problems. Thus, on the one hand, biofilm causes corrosion phenomena in the facilities, energy losses, reduction of the efficiency of processes, for example of the cooling systems, or pipe disablement. Likewise, biofilms act as sources of contamination, so that their presence is especially undesirable in those sectors where hygiene constitutes a fundamental aspect, as for example, in the manufacturing processes of food and beverages, medicines and cosmetics, as well as in the hospital environment.

In the biofilms present in the hospital environment, for example on the surfaces of catheters, implants or prostheses, Gram-positive bacteria, notably of the genus Staphylococcus, predominate, although infections due to Gram-negative bacteria and fungi tend to be more serious. The most common fungal infections are usually caused by pathogenic *Candida* species, particularly *C*. *albicans, C. dubliniensis, C. tropicalis and C. parapsilosis,* as described in the articles Hawser et al., Biofilm formation by Candida species on the surface of catheter materials in vitro, Infection Immunity, 1994, 62 (3), 915-921, and Jabra-Rizk et al., Fungal biofilms and drug resistance, Emerging Infect. Dis., 2004, 10 (1), 14-19.

The most relevant species involved in the formation of biofilm in the field of food production and that particularly compromise food safety are mainly *Listeria monocytogenes, Salmonella* spp., *Escherichia coli, Cronobacter* spp., *Pseudomonas* spp., *Campylobacter jejuni* and *Bacillus* spp., as described in the articles Mattila-Sandholm et al., Biofilm in the industry: A review, Food Rev. Int., 1992, 8 (4), 573-603, Lee Wong et al., Biofilm in Food Processing Environments, J. Dairy Sci., 1998, 81 (10), 2765-2770, and Jo et al., Maturation and survival of Cronobacter biofilms on silicone, polycarbonate, and stainless steel after UV light and ethanol immersion treatments, J. Food Protection, 2010, 73 (5), 952-956.

Therefore, it is essential to have effective hygiene systems that allow the control and elimination of biofilms, particularly in the agri-food, pharmaceutical and cosmetic industries, and also at the hospital level, and especially in the surfaces in contact with products, which are one of the most frequent contamination routes.

However, the procedures for the elimination of biofilms at industrial level, mainly based on the combination of mechanical processes and the use of disinfectants and/or detergents, are not totally effective.

Thus, it is considered that such cleaning processes can eliminate up to 90% or more of the microorganisms associated with a surface, but do not allow to eliminate them completely, as described in the article Gibson et al., Effectiveness of cleaning techniques used in the food industry in terms of the removal of bacterial biofilms, J. Appl. Microbiol., 1999, 87(1), 41-48. This is attributed mainly to the presence of the polymer matrix, which constitutes a barrier that prevents the full action of disinfectants. Thus, an effective cleaning procedure should fragment or dissolve the biofilm matrix, to allow the access of the disinfectants to the viable cells, as described in the article Chmielewski et al., Biofilm Formation and Control in Food Processing Facilities, Comprehensive Rev. Food Sci. Food Safety, 2003, 2, 22-32.

On the other hand, when designing an efficient industrial disinfection system, the characteristics of the various surfaces to be sanitized must be taken into account, so that in large open surfaces procedures involving extensive rinsing may be adequate, while in less accessible surfaces *in situ* cleaning systems, known as CIP *(cleaning-in-place),* in which the cleaning solutions are circulated through tanks, pipes and equipments, without the need to previously disassemble them, are preferred.

Numerous and diverse approaches for the control and elimination of biofilms have been described in the state of the art.

Thus, for example, the international patent application WO-A-96/36569 relates to enzymatic compositions for eliminating or preventing biofilm containing at least one mannanase enzyme, optionally combined with other enzymes selected from carbohydrases, proteases, lipases or glycoproteases. Additionally, the composition may contain enzyme stabilizer, biodispersant, biocides and/or surfactants.

Similarly, the international patent application WO-A-98/26807 relates to a method for the elimination of biofilm from surfaces by double enzymatic treatment, consisting in the treatment with a cleaning composition containing one or more hydrolases to remove the biofilm layer from the surface, and a bactericidal composition containing an oxidoreductase to kill the bacterial cells present in the biofilm.

Likewise, the international patent application WO-A-01/53010 describes a method for preventing, detaching and facilitating the elimination of the biofilm adhered to surfaces, formed in solid-liquid or solid-liquid-air interfaces, by means of the application of at least one enzyme selected from carbohydrases and proteases, or by the application of both, in this case sequentially, preferably first the carbohydrase and then the protease.

Also the international patent application WO-A-01/98214 relates to a method for eliminating and preventing the formation of biofilms on surfaces, which is based on degrading the acyl-homoserine lactones produced by the microorganisms of the biofilm, by using a composition that contains at least one acylase enzyme.

On the other hand, the international patent application WO-A-2004/041988 relates to a method for the elimination of biofilm by the simultaneous or consecutive application of a solution containing pancreatin as enzymatic mixture and a detergent solution of alkaline pH.

Additionally, in the European patent application EP-A-2243821 a composition for the elimination of biofilm is described which also consists in the combination of a detergent and an enzymatic mixture. The detergent is a combination of a wetting agent, a dispersant and a sequestrant; while the enzyme mixture contains a protease, a laccase, and a polysaccharidase.

In the Spanish patent application ES-A-2464872 a composition is described for the control and elimination of biofilm formed on a surface comprising a detergent in which the surfactant component consists of: a carboxylic acid ether, a mixture of sulfonated olefin and amine oxide, or an adduct of a polyol with ethylene oxide and propylene oxide, and a combination of enzymes consisting of a lipase, a protease and an α-amylase.

International patent application WO-A-2017/001472 relates to a method for laundering a textile, the use of a polypeptide having DNase activity and a detergent composition comprising a polypeptide having deoxyribonuclease (DNase) activity. It further discloses commercial detergents that could be used with the DNase enzyme, some of them include a combination of enzymes such as mananase and α-amylase, and fragrance compounds, such as linalool, limonene, geraniol, among others.

US patent application US-A-2017/0355932 discloses cleaning compositions that include a nuclease enzyme, e.g. a deoxyribonuclease enzyme, a ribonuclease enzyme, or a mixture thereof. and tannins, wherein the use of tannin enhances the malodour-reducing benefits of the enzyme. It discloses a detergent composition comprising a combination of enzymes comprising a mannanase, lipase, protease and an α-amylase.

Despite the various proposals available in the state of the art, there is still a need to have new products and procedures effective for the removal of biofilms, particularly in environments that are especially demanding in terms of hygiene, such as the agri-food, pharmaceutical and cosmetics industries, or in the hospital environment, which are capable of removing formed biofilms and also preventing the formation of new ones, and which are applicable for the cleaning of most surfaces, both open and closed (for example, pipes and circuits).

### Object of the invention

The object of the present invention is a detergent composition for the control and removal of biofilms.

An aspect not according to the invention is a method for the control and removal of biofilms wherein this composition is used.

Another aspect of the invention is the use of this composition for the control and removal of biofilms.

### Detailed description of the invention

The object of the present invention is a detergent composition for the control and removal of biofilms formed on a surface comprising a combination of enzymes comprising a mannanase, a protease and an α-amylase,and a botanical active ingredient, which comprises a combination of cineole, pinene, and menthadiene.

The authors of the present invention have developed a detergent composition based on the combination of a mannanase and a botanical active ingredient that, surprisingly, is highly effective in the control and removal of biofilms, both those formed on open and closed surfaces.

In the context of the invention, the expression "control of biofilm" means the prevention of the formation of biofilm on a surface, and the expression "removal of biofilm" means the substantial suppression of biofilm on a surface.

Throughout the present description, unless otherwise specified, the concentrations expressed as percentages always refer to the percentage weight/weight (w/w), that is, grams of a certain component per 100 g of composition, and the percentages of the different components of a composition are adjusted so that their sum is 100%.

In the context of the invention, the active matter of a surfactant, a hydrotropic agent, or a detergent composition refers to the residue that remains after removing the water and the possible cosolvents present in the product. The active matter of an enzyme is that indicated by the manufacturer in the corresponding technical sheet.

The term "approximately" refers to a deviation of plus/minus 10%, preferably plus/minus 5%.

In the present description, as well as in the claims, the singular forms "a", "an" and "the" include the plural reference unless the context clearly indicates otherwise. The ranges defined by the preposition "between" include also the two ends thereof.

The detergent composition for the control and removal of biofilms of the invention is a substantially aqueous detergent composition, that is, water constitutes the major solvent therein, and can be at least 50% by weight of the total weight of the composition.

The composition of the invention is a detergent composition, that is, it has detergent properties. According to the definition of International Standard ISO 862-1984: a detergent is a product formulated for cleaning thorough a process that develops detergency phenomena. Detergency is defined as the process by which soil is dislodged from the substrate on which it was held and brought into a state of solution or dispersion.

In the context of the invention, the detergent composition generally comprises one or more components selected from the group consisting of: surfactants, adjuvants, cosolvents, hydrotropes, pH regulating agents, and presentation aids, for example, water, in addition to the enzyme(s) and the botanical active ingredient.

In a preferred embodiment the detergent composition is an aqueous composition comprising at least one surfactant, at least one cosolvent, at least one adjuvant, pH regulating agents, in addition to the enzyme(s) and the botanical active ingredient, and water as solvent.

### Surfactants

In general, as is well known to the skilled in the art, surfactants are amphiphilic substances having a hydrophobic part and a hydrophilic part. This particular chemical structure of surfactants is responsible for their properties, for example, as humectants, by reducing the surface tension of the liquid, which favours the wetting of surfaces.

Surfactants can be classified into foaming and non-foaming, to indicate their greater or lesser degree of foaming. The choice of one or another type of surfactant will depend on its use. Thus, for example, within the field of surface sanitation in which the present invention is included, a foaming surfactant, that is, with foaming properties, will be preferred when applied to large surfaces, in open systems, where the rinsing process can be carried out in a simple way, while in the cleaning of surfaces of closed systems, such as pipes and conductions, the use a non-foaming surfactant, that is, with non-foaming properties, will be preferred since in this case these surfaces are not accessible for performing a proper rinsing and there would be a risk that residual foam remained.

The determination of the foaming power of a surfactant is a well known practice to the skilled in the art and the different methods that can be used are described, for example, in the book X. Domingo, A guide to the surfactants world, Proa, Barcelona, 1995 [ISBN: 84-8256-096-4].

In general, the technical sheets of the surfactants include information on their foaming characteristics, so that the skilled in the art can select the most appropriate for a specific application.

In the context of the invention, the detergent composition usually comprises one or more surfactants, selected from the group consisting of anionic, non-ionic, amphoteric, and mixtures thereof.

Among the most representative anionic surfactants are soaps, alkyl sulfates, alkyl ether sulfates, alkylbenzene sulfonates, and alkyl ether carboxylates. Other anionic surfactants are alkyl phosphates, dialkyl sulfosuccinates, α-olefin sulfonates, parafin sulfonates, sarcosinates, and taurates. Companies such as BASF, Huntsman, Croda, or Kao, market a wide range of anionic surfactants.

Soaps are salts of fatty acids with a chain of between 10 and 20 carbon atoms, preferably between 12 and 18.

The alkyl sulfates are esters of sulfuric acid with fatty alcohols with a chain of between 10 and 20 carbon atoms, preferably between 12 and 18, more preferably between 12 and 14, in the form of metal salts, ammonium salts or organic amine salts with alkyl or hydroxyalkyl groups. One of the most used is sodium lauryl sulfate.

The alkyl ether sulfates are esters of sulfuric acid with fatty alcohols with a chain of between 10 and 20 carbon atoms, preferably between 12 and 18, more preferably between 12 and 14, comprising between 0.5 and 10 moles of ethylene oxide, preferably between 0.5 and 5, and more preferably between 0.5 and 2, in the form of metal salts, ammonium salts or salts of organic amines with alkyl or hydroxyalkyl groups. One of the most used is sodium lauryl sulfate with 2 moles of ethylene oxide.

The alkylbenzene sulfonates derive from the sulfonation of alkylbenzenes and are generally used in the form of alkali metal or alkanolamine salts. The alkyl group in the alkylbenzene sulfonate preferably contains a chain of between 8 and 16 carbon atoms, preferably between 10 and 15. One of the most used is dodecylbenzene sulfonate.

The alkyl ether carboxylate or alkyl ether of carboxylic acid is an anionic surfactant, which corresponds to the following formula: 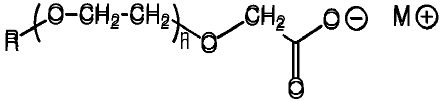 and it is the result of functionalizing an ethoxylated fatty alcohol with a carboxylic group through an ether type bond. Preferably, they are sodium salts (M=Na), although they can also be potassium or ammonium salts, or other metal ions or salts of organic amines with alkyl substituents or organic hydroxyalkyl alkanolamines. This surfactant is called alkyl ether carboxylate when is in salt form. R is an alkyl radical usually with a chain of between 4 and 20 carbon atoms, preferably between 10 and 18, and still more preferably between 12 and 14. The number of moles of ethylene oxide (n) is variable, while it is generally comprised between 0.5 and 15, preferably between 2 and 12. Preferred are those alkyl ether carboxylic acids and/or their salts with an alkyl chain containing between 10 and 18 carbon atoms, more preferably between 12 and 14 carbon atoms, and containing from 0.5 to 15, preferably from 2 to 12 moles of ethylene oxide.

Alkyl ethers of carboxylic acid mostly have a foaming behaviour, although some of them may have a non-foaming nature. Thus, the alkyl ethers of carboxylic acid of short chain, typically where R has less than 10 carbon atoms, usually have non-foaming characteristics, so they are more suitable for compositions for cleaning closed surfaces, while those having long chain, whose alkyl chain has typically 10 carbon atoms or more, usually have foaming characteristics, so they are more suitable for compositions for cleaning open surfaces. For each particular ether of carboxylic acid, the skilled in the art will know whether it has foaming or non-foaming characteristics, and will include it, accordingly, in compositions for the most appropriate use in each case.

This kind of surfactant is commercially available, for example, under the name Akypo^{®} (Kao), or Marlowet^{®} (Sasol).

In a preferred embodiment of the invention, the detergent composition comprises an alkyl ether carboxylate as anionic surfactant.

Among the most representative non-ionic surfactants are polyalkoxylated fatty alcohols, polyalkoxylated alkylphenols, polyalkoxylated fatty acids, fatty acid alkanolamides, copolymers of ethylene oxide and propylene oxide, polyalkoxylated polyols, esters of fatty acids with polyalkoxylated polyols, amine oxides, and amidoamine oxides. Polyalkoxylated surfactants can be prepared from ethylene oxide, propylene oxide, butylene oxide, or mixtures thereof.

The amine oxides are surfactants that are obtained by oxidation of tertiary amines, generally alkyldimethylamines, with hydrogen peroxide, and generally have foaming properties. The alkyl chain generally comprises between 10 and 18 carbon atoms, preferably between 12 and 14. Commercially they can be found, for example, under the names Genaminox^{®} (Clariant), Chemoxide^{®} (Lubrizol), or Standamox (BASF).

In a preferred embodiment, the detergent composition comprises an amine oxide as non-ionic surfactant. In a more preferred embodiment, it comprises a combination of alkyl ether carboxylate and an amine oxide. In a still more preferred embodiment the surfactant consists of a combination of alkyl ether carboxylate and an amine oxide. The weight ratio between the alkyl ether carboxylate and the amine oxide is generally comprised between 10:1 and 1:10, preferably between 8:1 and 1:5, more preferably between 5:1 and 1:2, and still more preferably between 5:1 and 2:1.

Polyalkoxylated polyols, preferably with ethylene oxide and/or propylene oxide, are adducts of a polyol with an alkylene oxide. In general these adducts have a low foaming power. The polyol can be, for example, glycerine, polyglycerine, trimethylolpropane, ethylene glycol, pentaerythritol, erythritol, or polyethylene glycol, among others. In a preferred embodiment, the polyol is glycerine.

In another preferred embodiment of the invention, the detergent composition comprises an adduct of polyol with ethylene oxide and propylene oxide as non-ionic surfactant. In a more preferred embodiment the surfactant of the composition of the invention consists of an adduct of polyol with ethylene oxide and propylene oxide. In another more preferred embodiment the detergent composition comprises as surfactant an adduct of glycerine with ethylene oxide and propylene oxide. In a still more preferred embodiment the surfactant consists of an adduct of glycerine with ethylene oxide and propylene oxide.

These adducts of polyols and alkylene oxides allow preparing non-foaming compositions, which are suitable for the application in closed surfaces such as pipes or circuits.

These polyol adducts are commercially available. Thus, for example, glycerine adducts can be obtained, for example, under the trade name Danox^{®} (Kao), Voranol^{®} (Dow), Voralux^{®} (Dow) or Specflex^{®} (Dow).

The polyalkoxylated polyols can also be esterified with fatty acids and thus generate non-ionic surfactants with versatile properties. Fatty acid esters with polyethoxylated glycerine having between 2 and 17 moles of ethylene oxide are particularly preferred, and the esters of coconut fatty acids are more preferred. This type of surfactant can be commercially obtained under the name Levenol^{®} (Kao).

When the composition is used to control and remove biofilms on open surfaces the surfactant can be a mixture of an alkyl ether carboxylate with foaming properties and amine oxide, which allows the formation of a dense foam with small bubbles and which is stable throughout time.

On the other hand, in the case of closed surfaces, the surfactant may be an alkyl ether carboxylate with non-foaming properties, or an adduct of a polyol, for example, glycerine, with ethylene oxide and propylene oxide, which allow a better control of foam and an easy rinse.

The surfactant content, in active matter, in the composition of the invention does not usually exceed 25% by weight of active matter on the total weight of the composition, preferably the content of surfactant is comprised between 2% and 20% by weight, more preferably between 5% and 15% by weight, and still more preferably between 7% and 12% by weight on the total weight of the composition.

### Adjuvants

An adjuvant is a compound that, with regard to the detergent action, adds its particular properties to those of the other components of the composition. Among the most frequent adjuvants are sequestering agents, alkaline agents, such as alkaline carbonates and silicates, and bleaching agents, such as sodium perborate or percarbonate.

In a preferred embodiment, the detergent composition comprises an adjuvant comprising at least one sequestering agent.

As is well known to the skilled in the art, sequestering agents, also known as chelating agents, are substances capable of forming soluble complexes with metal ions. Specifically, in the field of detergency, its presence allows improving the action of surfactants, by removing metal ions from the medium, mainly calcium and magnesium, thus decreasing the hardness of water and reducing the formation of insoluble salts.

Some of the sequestering agents suitable for use in the context of the present invention are, for example, polyphosphates, especially alkaline tripolyphosphates and pyrophosphates; phosphonates such as, for example, HEDP (1-hydroxyethane 1,1-diphosphonic acid), DTPMP (diethylenetriamine pentamethylenephosphonic acid), EDTMP (ethylene diamine tetramethylenephosphonic acid), ATMP (amino trimethylenephosphonic acid), or HDTMP (hexamethylenediamine tetramethylenephosphonic acid), or their alkaline salts; hydroxypolycarboxylates, such as citric, tartaric or gluconic acid; aminopolycarboxylates, such as EDTA (ethylenediaminetetraacetic acid), DTPA (diethylenetriaminepentaacetic acid), NTA (nitrilotriacetic acid), GLDA (glutamic acid, N,N-diacetic), MGDA (methylglycine diacetic acid), IDS (iminodisuccinic acid), EDDS (ethylenediamine-N,N'-disuccinic acid) or their alkaline salts; polycarboxylates: itaconic acid or its alkali salts; or mixtures thereof.

Preferably, the sequestering agent is selected from the group consisting of citric acid, tartaric acid, gluconic acid, EDTA, DTPA, NTA, DTPMP, GLDA and MGDA, their sodium salts; and mixtures thereof; more preferably the sequestering agent is selected from the group consisting of citric acid, MGDA, their sodium salts; and mixtures thereof. In a particularly preferred embodiment the sequestering agent comprises citric acid and the sodium salt of MGDA; and in a more preferred embodiment the sequestering agent consists of citric acid and the sodium salt of MGDA.

The content of adjuvant in the composition of the invention does not usually exceed 20% by weight on the total weight of the composition, preferably the content is comprised between 2% and 15% by weight, more preferably between 3% and 12% by weight, still more preferably between 5% and 10% by weight, and still more preferably between 6% and 9% by weight on the total weight of the composition.

### Cosolvents

The detergent composition usually contains a cosolvent.

A cosolvent is a second solvent added in small amounts to improve the solvent power or the stabilizing properties of the primary solvent, which is usually water in the detergent composition of the invention.

In the context of the invention, in general, the cosolvent is present in an amount not exceeding 50% by weight of the amount of water present in the detergent composition.

Among the most common cosolvents are propylene glycol, ethanol, *n-*propanol, isopropanol, n-butanol, glycerine, polyethylene glycol, 3-methoxy-3-methyl-1-butanol, *N,N*-dimethylamides of saturated or unsaturated C₆-C₁₈ fatty acids, esters of glycerine with saturated or unsaturated C₆-C₁₈ fatty acids, and mixtures thereof. These cosolvents are suitable to be incorporated into the composition of the invention.

In preferred embodiments, mixtures selected from the group consisting of ethanol and isopropanol, propylene glycol and 3-methoxy-3-methyl-1-butanol, ethanol and propylene glycol, and isopropanol and propylene glycol are used as cosolvents.

Some of the cosolvents have properties that go beyond the simple improvement of the solvent power of the primary solvent, and which in practice provide detergency characteristics typical of the surfactants. This is the case of *N,N-*dimethylamides of saturated or unsaturated C₆-C₁₈ fatty acids and of esters of glycerine with saturated or unsaturated C₆-C₁₈ fatty acids, in which an appropriate combination of the fatty chains allows to obtain a high degree of efficiency in the biofilm removal, such as for example the *N,N*-dimethylamide of 9-decenoic acid, or the ester of glycerine with cis or trans oleic, cis or trans linoleic and 9-decenoic acid. These two products and other analogues are the result of olefin metathesis and are available in the market through the companies Stepan or Elevance. Also providing additional functional characteristics is 3-methoxy-3-methyl-1-butanol, which is available through the company Kuraray.

In a preferred embodiment, the composition of the invention contains ethanol as a cosolvent.

In another preferred embodiment, the composition of the invention contains a combination of ethanol and propylene glycol.

In another preferred embodiment, the composition of the invention contains a combination of ethanol and isopropanol.

In another preferred embodiment, the composition of the invention contains 3-methoxy-3-methyl-1-butanol, optionally in combination with propylene glycol and/or ethanol.

In another preferred embodiment of the invention the detergent composition contains 3-methoxy-3-methyl-1-butanol, optionally in combination with propylene glycol and/or ethanol, and does not contain additional surfactants.

In another preferred embodiment, the composition of the invention contains *N,N*-dimethylamide of saturated or unsaturated C₆-C₁₈ fatty acids, optionally in combination with propylene glycol and/or ethanol.

In another preferred embodiment of the invention the detergent composition contains *N,N*-dimethylamide of saturated or unsaturated C₆-C₁₈ fatty acids, optionally in combination with propylene glycol and/or ethanol, and does not contain additional surfactants.

The content of cosolvent in the composition of the invention does not usually exceed 25% by weight on the total weight of the composition, preferably the content is comprised between 2% and 20% by weight, more preferably between 3% and 15% by weight, still more preferably between 4% and 12% by weight, and still more preferably between 5% and 10% by weight on the total weight of the composition.

### pH regulating agents

The detergent composition generally contains a pH regulating agent, for example, of basic nature, such as alkaline hydroxides; ammonia; mono-, di- or trialkylamines; mono-, di-, or tri-alkanolamines; or of acid nature, such as mineral acids as, for example, hydrochloric acid or sulfuric acid, or carboxylic acids such as, for example, acetic acid, lactic acid, tartaric acid, or citric acid; or mixtures thereof. Preferably, the pH regulating agent comprises a mixture of at least one alkanolamine and a carboxylic acid, more preferably a mixture of at least one alkanolamine and citric acid, and still more preferably a mixture of at least one alkanolamine selected from monoethanolamine, triethanolamine, and mixtures thereof, and citric acid. In a particularly preferred embodiment, the pH regulating agent comprises a mixture of monoethanolamine and citric acid, and in another particularly preferred embodiment, the pH regulating agent comprises a mixture of monoethanolamine, triethanolamine and citric acid.

Generally the composition of the invention contains pH regulating agents for adjusting the pH value in a range comprised between 7 and 10, preferably between 8 and 9.

The content of the pH regulating agent in the composition of the invention does not usually exceed 23% by weight on the total weight of the composition, preferably the content is comprised between 4% and 20% by weight, more preferably between 6% and 18% by weight, still more preferably between 8% and 15% by weight, and still more preferably between 9% and 12% by weight on the total weight of the composition.

### Hydrotropes

Additionally, the detergent composition may contain a hydrotropic agent.

Hydrotropes, as is well known to the skilled in the art, are products that increase the solubility and miscibility of organic salts in water, and provide greater homogeneity to the products in solution. Some hydrotropes suitable for use in the detergent composition of the present invention are, for example, toluenesulfonates, xylenesulfonates, cumenesulfonates, and methylnaphthalenesulfonates, in the form of their monoethanolammonium, diethanolammonium, and triethanolammonium salts, or as alkaline salts, preferably, sodium or potassium salts; or it is a short-chain alkyl sulfate, such as, for example, n-octyl sulfate, 2-ethylhexyl sulfate, or its alkaline salts, preferably sodium or potassium salts.

In case of being present, the content of hydrotrope in the composition of the invention does not usually exceed 15% by weight of active matter on the total weight of the composition, preferably the content is comprised between 2% and 15% by weight, more preferably between 4% and 12% by weight, and still more preferably between 6% and 10% by weight on the total weight of the composition.

### Enzyme combination

The detergent composition of the present invention comprises a combination of enzymes comprising mannanase, a protease and an α-amylase.In a preferred embodiment the composition of the present invention comprises a combination of enzymes consisting of a mannanase, a protease and an α-amylase.

In the context of the invention, the expression "a mannanase" also extends to the combination of two or more mannanases, and, likewise, the expressions "a protease" and "an α-amylase" extend to the combination of two or more proteases or amylases, respectively.

### Mannanase

In the context of the invention, the mannanase refers to mannohydrolase, which includes mannanhydroxylase, i.e., endomannanase, as well as mannoside mannohydrolase, i.e., exo-mannanase. The term also includes mannohydrolases including all possible specificities, such as α, β, 1,2, 1,3, 1,4, 1,6, L, D. This means that the mannanases that cleave any polysaccharide containing mannose in a bond involving at least one mannose sugar residue (a-mannosidase: E.C. 3.2.1.24; β-mannosidase: E.C. 3.2.1.25, etc.) are suitable for the purposes of the present invention. Mannanase is available through, for example, the companies DuPont and Novozymes.

In particular, the enzyme combination comprises a mannanase, which is preferably a 1,4- β -mannosidase that randomly hydrolyzes (1,4) bonds in mannans, galactomannans and glucomannans, such as, for example, Mannaway from Novozymes company.

### Protease

Proteases, or peptidases, constitute a group of enzymes capable of hydrolyzing the peptide bond of proteins. They belong to subclass EC 3.4.

The proteases are classified into exopeptidases or endopeptidases, according to their centre of action, so that the exopeptidases hydrolyse the peptide bond of the carboxy or amino terminal end of the polypeptide chain, while the endopeptidases cleave the internal peptide bonds of the polypeptide.

Proteases are also classified, according to the functional group present in their active site, into four groups: serine-proteases, cysteine-proteases, asparticproteases, and metalloproteases.

Likewise, depending on the pH at which they are active, they are classified into acidic, alkaline or neutral proteases.

Proteases can be obtained from plants, animals or microorganisms (bacteria, yeast and fungi).

In the context of the present invention, a protease of any origin can be employed.

Also included within the field of the present invention are mutant forms of the proteases, either by chemical modification or by genetic engineering.

Some proteases obtained from plants are, for example, papain, bromelain, and ficin. Among the proteases obtained from animals are, for example, protaminase, trypsin, chymotrypsin, pepsin and renin.

Proteases can also be obtained from bacteria such as *Bacillus licheniformis, Bacillus amyloliquefaciens, Bacillus firmus, Bacillus megaterium, Bacillus pumilis, Streptomyces fradiae, Streptomyces griseus, Streptomyces rectus, Bacillus subtilis, Bacillus cereus, Bacillus metagerium* or *Pseudomonas aeruginosa,* among others; as well as from fungi, such as *Aspergillus niger, Aspergillus sojae, Aspergillus oryzae, Aspergillus flavus, Pericularia oryzae, Endothia parasitica, Mucor miehei,* or *Mucor pusillus.*

In the context of the invention, a protease selected from those commercially available may be used, such as, for example, those marketed under the names Alcalase^{®}, Savinase^{®}, Primase^{®}, Durazym^{®}, Polarzyme^{®}, Kannase^{®}, Liquanase^{®}, Ovozyme^{®}, Neutrase^{®}, Everlase^{®}, Esperase^{®}, Maxatase^{®}, Maxacal^{®}, Maxapem^{®}, Polarzyme^{®}, Properase^{®}, Purafect^{®}, Purafect^{®} OxP, Properase^{®}, Excellase^{®} or Opticlean^{®}.

In a preferred embodiment, the protease is a subtilisin. Subtilisins (EC 3.4.21.62) belong to the group of serine proteases, and are produced mainly by bacteria of the *Bacillus* genus, such as *Bacillus sp., Bacillus subtilis, Bacillus alcalophilus, Bacillus amyloliquefaciens, Bacillus clausii, Bacillus lentus, Bacillus licheniformis,* or *Bacillus stearothermophilus,* among others. Among subtilisins, for example, subtilisin A or subtilisin Carlberg, subtilisin BPN', subtilisin DY, subtilisin 309, subtilisin Y, subtilisin 168, or subtilisin PB92 may be mentioned. These proteases are commercially available like, for example, those marketed under the names Alcalase^{®}, Everlase^{®}, Savinase^{®} or Polarzyme^{®} by the company Novozymes A/S.

### α-Amylase

*α*-amylases (EC 3.2.1.1) are enzymes that hydrolyze 1,4-α-D-glycosidic bonds in polysaccharides that contain three or more glucose units bound by 1,4-a bonds. *α*-amylases hydrolyze starch, as well as glycogen and oligosaccharides. They can be obtained from animals, plants or microorganisms. Any α-amylase of any origin is suitable for use within the field of the present invention.

In a preferred embodiment, the α-amylase is of microbial origin. Amylases can be obtained from bacteria such as, for example, *Acinetobacter* spp., *Bacillus acidocaldarius* A-2, *Bacillus alcalophilus subsp. Halodurans, Bacillus amyloliquefaciens, Bacillus cereus, Bacillus coagulans, Bacillus licheniformis, Bacillus macerans, Bacillus subtilis, Halobacterium halobium,* among others; or from fungi such as *Aspergillus niger, Aspergillus oryzae, Fusarium oxysporum, Humicola insolens, Humicola lanuginosa, Mucor pusillus* or *Trichoderma viride;* or from yeasts, such as *Candida tropicalis* var. *japonica, Endomycopsis fibuligera, Lipomyces starkeyi, S. castellii, Pichia polymorpha* or *Sachwanniomyces alluvius.*

Some commercially available α-amylases are, for example, Termamyl^{®}, Duramyl^{®}, Nalasase^{®}, Fungamyl^{®}, Liquozyme^{®}, Stainzyme^{®}, Bioamylase^{®}, Kemzym^{®}, or Purastar^{®}.

The content of each of the enzymes in the detergent composition of the invention does not usually exceed 2% by weight of active matter on the total weight of the composition, being generally comprised between 0.0001% and 1.5% more preferably comprised between 0.001% and 1.0% by weight, of enzymatic active matter.

The content of mannanase in the composition of the invention is preferably comprised between 0.0001% and 0.5% by weight of active matter, more preferably between 0.001% and 0.2% by weight, still more preferably between 0.005% and 0.1% by weight, and still more preferably between 0.0075% and 0.05% by weight on the total weight of the composition. A particularly preferred content is 0.01% by weight.

In case of being present, the content of protease in the composition of the invention is preferably comprised between 0.005% and 1.0% by weight of active matter, more preferably between 0.01% and 0.5% by weight, still more preferably between 0.025% and 0.25% by weight, and still more preferably between 0.05% and 0.2% by weight on the total weight of the composition. A particularly preferred content is 0.07% by weight.

In case of being present, the content of α-amylase in the composition of the invention is preferably comprised between 0.01% and 1.0% by weight of active matter, more preferably between 0.02% and 0.8% by weight, still more preferably between 0.05% and 0.5% by weight, and still more preferably between 0.075% and 0.25% by weight on the total weight of the composition. A particularly preferred content is 0.15% by weight.

The enzyme combination of the detergent composition of the invention comprises a combination of mannanase, αamylase, and protease. In another preferred embodiment the enzyme combination of the detergent composition of the invention consists of a combination of mannanase, α- amylase, and protease.

Commercially available enzymes are usually supplied in the form of aqueous solutions of various concentrations, so that the appropriate amounts of the commercial enzymes will be used in each case to provide the appropriate percentages of the enzyme combination, as well as the desired concentrations in the composition of the invention.

Thus, for example, commercial aqueous solutions of mannanases are available usually having a content of enzymatic active matter comprised between 0.5% and 2% by weight, or commercial aqueous solutions of proteases and amylases usually having a content of enzymatic active matter comprised between 5% and 15% expressed by weight, expressed by weight. In each case, the skilled in the art will know how to calculate the amount of commercial product which must be used to obtain a composition with the appropriate proportions and concentrations according to the present invention.

Alternatively, the content of enzymatic active matter can be expressed as activity units, according to the information usually contained in the technical sheets corresponding to the enzymatic products.

Thus, for example, the enzymatic activity of mannanases can be measured as mannanase MIUM units, defined according to an assay in which the amount of reducing sugars released from an appropriate substrate is determined, as described, for example, in the article Rättö et al, Enzymatic hydrolysis of isolated and fibre-bound galactoglucomannans from pine-wood and pine kraft pulp, Appl. Microbiol. Biotechnol., 1993, 40, 449-454.

For proteases, their enzymatic activity can be measured in units called KNPU *(Kilo Novo Protease Units)* defined in terms of the amount of protease capable of hydrolyzing a certain amount of dimethylcasein to peptides per minute, under certain conditions, as described, for example, in the international patent application WO-A-03/018734.

Finally, for *α*-amylases their enzymatic activity can be measured using the KNU unit *(Kilo Novo alpha-Amylase Units),* defined as the amount of enzyme which hydrolyzes 5.26 g of starch per hour, according to certain conditions, as indicated, for example, in the US patent application US-A-2012/0122754.

Usually the detergent composition of the invention comprises stabilizing agents such as, for example, glycerine, polyethylene glycol or propylene glycol, to improve the stability of the enzymes therein.

### Botanical active ingredient

The detergent composition of the invention comprises a botanical active ingredient.

In the context of the invention, a botanical active ingredient is a compound found in a plant, that is, roots, leaves, bark, stems, flowers and fruit, which may be, for example, terpene, steroid, polyphenol, alkaloid, flavonoid, catechin, glycoside, and derivatives thereof, such as, for example, esters. The extraction of botanical active ingredients from vegetable matter is well known to the skilled in the art and is described, for example, in the book S.C. Mandal, V. Mandal and A.K. Das, Essentials of Botanical Extraction: Principles and Applications, Elsevier, San Diego, 2015.

Botanical active ingredients are generally obtained by extraction using solvents such as water, alcohols, such as, for example, methanol, ethanol or isopropanol, polyols, such as, for example, propylene glycol or glycerine, ketones, such as, for example, acetone, non water-soluble solvents, such as, for example, hexane, and mixtures thereof. Optionally, the solvent may include an acid or a base to adjust the pH. The extraction can also be carried out in supercritical conditions, thus avoiding the use of liquid solvents. In this case fluids in a supercritical state are used, such as, for example, carbon dioxide, nitrous oxide, ammonia, n-heptane, n-butane or xenon.

In the context of the invention, the botanical active ingredient comprises a combination of cineole, pinene, and menthadiene. Optionally, the active ingredients having hydroxyl groups can be in the form of esters with C₁-₁₈ carboxylic acids, for example linalyl propionate.

In addition to the extraction, these botanical active ingredients can be occasionally obtained by organic synthesis by methods that are well known to the skilled in the art, or by fermentation processes with microorganisms.

Cineole, also called eucalyptol, is a terpene with the CAS number 470-82-6.

The name pinene comprises isomers of a bicyclic monoterpene, such as, for example, those corresponding to the CAS numbers 80-56-8, 127-91-3, 7785-70-8, 7785-26-4, 19902-08-0 and 18172-67-3.

The name menthadiene comprises isomers such as, for example, (*R*)-*p-*mentha-1,8-diene with the CAS number 5989-27-5, 3,8-*p*-menthadiene with the CAS number 586-67-4, or 2,8-*p*-menthadiene with the CAS number 499-99-0.

These botanical active ingredients are present in vegetables and their location is available to the expert in the art, for example, through the website www.thegoodscentscompany.com/data/.

In a preferred embodiment the botanical active ingredient is in the form of an extract of a plant material selected from the group consisting of thyme, oregano, cinnamon, eucalyptus, niaouli, and mixtures thereof. More preferably the botanical active ingredient is in the form of a mixture of extracts of thyme, oregano, cinnamon and eucalyptus.

The botanical active ingredients are commercially available through companies such as, for example, Soria Natural, Linnea, Ayumi, Euromed, Lubrizol, Nutrasorb, or Plameca.

The content of botanical active ingredient or combination of botanical active ingredients in the composition of the invention does not usually exceed 10% by weight of active matter on the total weight of the composition, preferably the content is comprised between 0.01% and 10% by weight, more preferably between 0.05% and 5% by weight, still more preferably between 0.08% and 3% by weight, and still more preferably between 0.1% and 1% by weight on the total weight of the composition.

### Composition for the control and removal of biofilm formed on a surface

The detergent composition for the control and removal of biofilm formed on a surface according to the present invention is an aqueous solution comprising a combination of enzymes, and a botanical active ingredient, as defined above.

In a preferred embodiment of the invention, the detergent composition comprises:
- between 2% and 20%, preferably between 5% and 15%, and more preferably between 7% and 12% of surfactant,
- between 2% and 15%, preferably between 2% and 15%, more preferably between 3% and 12%, still more preferably between 5% and 10%, and still more preferably between 6% and 9% of adjuvant,
- between 2% and 20%, preferably between 3% and 15%, more preferably between 4% and 12%, and still more preferably between 5% and 10% of cosolvent,
- between 4% and 20%, preferably between 4% and 20%, more preferably between 6% and 18%, and still more preferably between 5% and 10% of pH regulating agent,
- a combination of enzymes comprising a mannanase, a protease and an α-amylase, and
- a botanical active ingredient, which comprises a combination of cineole, pinene, and menthadiene,
wherein the percentages are expressed by weight of active matter with respect to the total weight of the composition. The preferred content of the enzymes and the botanical active ingredient are the ones mentioned above in the corresponding sections.

In another preferred embodiment of the invention, the detergent comprises:
- between 2% and 20%, preferably between 5% and 15%, and more preferably between 7% and 12% of surfactant,
- between 2% and 15%, preferably between 2% and 15%, more preferably between 3% and 12%, still more preferably between 5% and 10%, and still more preferably between 6% and 9% of adjuvant,
- between 2% and 20%, preferably between 3% and 15%, more preferably between 4% and 12%, and still more preferably between 5% and 10% of cosolvent,
- between 4% and 20%, preferably between 4% and 20%, more preferably between 6% and 18%, and still more preferably between 5% and 10% of pH regulating agent,
- between 2% and 15%, preferably between 4% and 12%, and more preferably between 6% and 10% of hydrotrope,
- a combination of enzymes comprising a mannanase, a protease and an α-amylase, and
- a botanical active ingredient, which comprises a combination of cineole, pinene, and menthadiene,
wherein the percentages are expressed by weight of active matter with respect to the total weight of the composition. The preferred content of the enzymes and the botanical active ingredient are the ones mentioned above in the corresponding sections.

The authors of the present invention have observed that the use of the detergent composition comprising a combination of enzymes, including mannanase, and a botanical active ingredient, surprisingly, is highly effective in the removal of biofilms on different types of substrates, achieving in particular the purpose of disintegrating their polymer matrix, which provides significantly higher disinfection levels, as can be seen in the results obtained, described in the examples. This composition is surprisingly stable despite including therein the components of the detergent and enzymes.

The concentrations of the components of the detergent, the combination of enzymes and the botanical active ingredient can be suitably adjusted according to the type of biofilm to be treated, as well as the type of surface, for example, if it is applied to the cleaning of open or closed systems.

In one embodiment of the invention, the composition is particularly suitable for the control and removal of biofilm from open surfaces and preferably contains between 0.1% and 2%, expressed by weight, of active matter, preferably between 0.2% and 1.0%, and more preferably between 0.4% and 0.8%. In this more preferred embodiment, a composition with 40% by weight of active matter is applied in the form of an aqueous solution at between 1% and 2% by weight. According to this embodiment, the surfactant contained in the aqueous detergent composition is preferably of the foaming type, and is selected from a foaming ether of carboxylic acid, an amine oxide, and mixtures thereof.

In another embodiment of the invention, the composition is particularly suitable for the removal of biofilm from closed surfaces, of difficult access, such as conductions and pipes, to be applied according to CIP cleaning systems. According to this particular embodiment, the composition preferably contains between 0.1% and 2%, expressed by weight, of active matter, preferably between 0.2% and 1.0%, and more preferably between 0.4 % and 0.8%. According to this embodiment the surfactant contained in the aqueous detergent composition is preferably of the non-foaming type, and is selected from a non-foaming ether of carboxylic acid and an adduct of polyol and ethylene oxide and propylene oxide, preferably wherein the polyol is glycerine.

Alternatively, the composition of the invention can be prepared from a concentrated solution with the detergent components, from a concentrated solution of the enzyme combination and from a concentrated solution with the botanical active ingredient, which are provided separately and combined and conveniently diluted at the time of usage, so that the detergent composition of the invention is formed *in situ,* following a procedure substantially analogous to that described, for example, in the Spanish patent application ES-A-2464872.

### Method for the removal of biofilms

An aspect not according to the invention is a method for the control and removal of biofilm formed on a surface comprising the following steps:
(i) applying the composition of the invention on the surface;
(ii) allowing the composition to act for a period comprised between 10 min and 180 min, preferably comprised between 10 min and 90 min, and
(iii) rinsing with water.
   In certain cases, for example, abundant presence of biofilm, the process can also comprise the following step:
(iv) applying a disinfectant.

In step (i), the application of the composition of the invention on the surface is carried out in the most appropriate way according to the type of surface to be treated.

Thus, in the case of cleaning an open surface, the composition can be applied, for example, by using suitable equipment for spraying the composition at low pressure. In the case of cleaning closed surfaces, such as CIP systems, the composition of the invention is applied by circulating the solution in these systems.

Preferably, the composition of the invention is applied in this process at a temperature comprised between 40° C and 60° C, preferably between 45° C and 55° C.

The contact time between the composition and the surface, according to step (ii), can vary depending on the density of the biofilm, the type of exopolysaccharides present in the matrix, which, in turn, depends on the microorganisms that compose the biofilm.

In general, for cleaning open surfaces, good results are obtained with shorter contact times, preferably comprised between 15 and 30 minutes, while for closed surfaces (CIP), the contact or circulation time is usually longer, preferably comprised between 30 and 120 minutes.

Among the disinfectants suitable to be used in step (iv) of the method according to the present invention are, for example, oxidizing substances, such as hydrogen peroxide, peracetic acid, potassium persulfate, or sodium hypochlorite.

In the case of the abundant presence of biofilm, in the method of the invention, before step (i), and before applying the composition of the invention, an alkaline solution is applied on the surface and allowed to act for a period of time comprised between 10 min and 90 min.

The authors of the present invention have observed that the incorporation of this alkalinisation step results in an increase of the antibiofilm effectiveness of the treatment, in cases of abundant presence of biofilm.

The alkaline solution is an aqueous solution of a base, for example, sodium hydroxide, potassium hydroxide, or sodium carbonate, which generally has a pH value comprised between 9 and 10. This solution can be applied to the surface by spraying.

The cleaning method can be applied to practically any type of surface on which a biofilm has been formed, for example, metallic surfaces such as, for example, aluminium, chromium, steel, or stainless steel; as well as glass, ceramic or porcelain surfaces; and also plastic surfaces, such as thermoplastic or thermoset polymers, for example, epoxy resins; among other materials.

Furthermore, this method is applicable for surfaces according to any arrangement and accessibility, being suitable for the cleaning of open surfaces as well as to be applied in CIP cleaning systems *(cleaning-in-place).*

### Use of the composition

Another aspect of the present invention is the use of the composition of the invention for the control and removal of biofilm formed on a surface.

This use includes both the active removal of the biofilm already deposited on the surface, and the prevention of its formation, so that the use of this composition can be used for the cleaning of surfaces susceptible of developing a biofilm thereon, for the purpose of maintenance, to prevent its formation.

The composition of the invention has a disinfecting effect, which does not require the use of conventional biocide agents to preventively avoid the formation of biofilm.

This composition is suitable for the control and removal of any type of biofilm, originated from one or more microorganisms that can be aerobic and anaerobic bacteria, fungi (including yeasts and filamentous fungi), algae and/or protozoa.

In the experimental tests with the detergent composition for cleaning a biofilm on a stainless steel surface, it is observed that its use is highly effective for significantly reducing the presence of biofilms and for the disintegration of its polymer matrix. This effect allows that in a possible subsequent treatment with a disinfectant the total elimination of the viable bacterial cells is achieved.

One of the advantages of the composition of the invention is to make unnecessary the application of a disinfecting agent in the preventive treatment to avoid the formation of biofilm, so that with a single product it is possible to prevent the formation of biofilm.

In the following examples, particular embodiments of the composition of the invention are shown, as well as the results of the use thereof for the removal of biofilms.

### Examples 1 to 14: Compositions for the control and removal of biofilms

14 formulations corresponding to the detergent of the composition were prepared using the amounts detailed in Table I, expressed as % of product as it is:

**TABLE I**

| Component | Example | | | | | | |
|---|---|---|---|---|---|---|---|
| | 1 | 2* | 3 | 4* | 5 | 6 | 7* |
| Monoethanolamine | 6.0 | 6.0 | 6.0 | 6.0 | 5.0 | 5.0 | 5.0 |
| Triethanolamine | 3.0 | 3.0 | 3.0 | 3.0 | 3.0 | - | - |
| Citric acid. H₂O | 7.0 | 7.0 | 7.0 | 7.0 | 7.0 | 5.0 | 5.0 |
| Ethanol | 5.0 | 5.0 | 5.0 | 5.0 | 5.0 | 4.0 | 4.0 |
| Isopropanol | - | - | - | - | - | - | - |
| Propylene glycol | - | - | - | - | - | 10.0 | 10.0 |
| MMB | - | - | - | - | - | - | - |
| Dimethylamide | - | - | - | - | - | - | - |
| Anionic | - | - | - | - | - | 6.0 | 6.0 |
| Non-ionic 1 | 10.0 | 10.0 | 10.0 | 10.0 | 10.0 | - | - |
| Non-ionic 2 | - | - | - | - | - | 6.0 | 6.0 |
| Adjuvant | 1.2 | 1.2 | 1.2 | 1.2 | 1.2 | 1.2 | 1.2 |
| Hydrotrope | 11.0 | 11.0 | 11.0 | 11.0 | 11.0 | - | - |
| Amylase | 1.2 | 1.2 | 1.2 | 1.2 | 1.2 | 2.0 | 2.0 |
| Lipase | - | 0.15 | - | 0.15 | - | - | 0.15 |
| Mannanase | 1.0 | 1.0 | 1.0 | 1.0 | 1.0 | 1.0 | 1.0 |
| Protease | 0.8 | 0.8 | 0.8 | 0.8 | 0.8 | 2.0 | 2.0 |
| Botanical active ingredient | 3.0 | 2.5 | 2.0 | 3.0 | 2.5 | 2.0 | 3.0 |
| Water | q.s. 100 | | | | | | |

| | | | | | | | |
|---|---|---|---|---|---|---|---|
| q.s. = *quantum satis* (sufficient quantity) * Reference examples | | | | | | | |

| Component | Example | | | | | | |
|---|---|---|---|---|---|---|---|
| | 8 | 9 | 10* | 11 | 12* | 13 | 14 |
| Monoetanolamine | 5.0 | 5.0 | 5.0 | 6.0 | 3.0 | 5.5 | 5.5 |
| Trietanolamine | - | - | - | 3.0 | - | - | - |
| Citric acid. H₂O | 5.0 | 5.0 | 5.0 | 7.0 | 2.0 | 6.5 | 6.5 |
| Ethanol | 4.0 | 4.0 | 4.0 | 3.5 | - | - | - |
| Isopropanol | - | - | - | 1.5 | 1.5 | - | - |
| Propylene glycol | 10.0 | 10.0 | 10.0 | - | 12.5 | 10.0 | 10.0 |
| MMB | - | - | - | - | - | 10.0 | - |
| Dimethylamide | - | - | - | - | - | - | 10.0 |
| Anionic | 6.0 | 6.0 | 6.0 | - | 3.0 | - | - |
| Non-ionic 1 | - | - | - | 10.0 | - | - | - |
| Non-ionic 2 | 6.0 | 6.0 | 6.0 | - | 7.0 | - | - |
| Adjuvant | 1.2 | 1.2 | 1.2 | 1.2 | 0.4 | 1.1 | 1.1 |
| Hydrotrope | - | - | - | 11.0 | - | - | - |
| Amylase | 2.0 | 2.0 | 2.0 | 1.2 | 1.2 | 1.2 | 1.2 |
| Lipase | - | - | 0.5 | - | 0.5 | - | - |
| Mannanase | 1.0 | 1.0 | 1.0 | 1.0 | 1.0 | 1.0 | 1.0 |
| Protease | 2.0 | 2.0 | 2.0 | 0.8 | 0.8 | 0.8 | 0.8 |
| Botanical active ingredient | 2.5 | 3.0 | 3.0 | 2.5 | 2.5 | 3.0 | 3.0 |
| Water | q.s. 100 | | | | | | |

| | | | | | | | |
|---|---|---|---|---|---|---|---|
| * Reference examples Anionic = alkyl ether carboxylate, with 92% by weight of active matter Non-ionic 1 = polyol adduct, with 100% by weight of active matter Non-ionic 2 = amine oxide, with 30% by weight of active matter Adjuvant = MGDA trisodium salt, in solid form Botanical active ingredient = extract comprising extracts of thyme, oregano and cinnamon, with 6.65% by weight of active matter | | | | | | | |

For the preparation of the compositions of Table I, a commercial lipase containing 5% by weight of active matter, a protease with 8% by weight of active matter, an α-amylase with 11% by weight of active matter and a mannanase with 1% by weight of active material were used.

The detergent formulations were prepared by mixing the components and adjusted to a pH comprised between 8 and 9.

The formulations were tested according to ASTM D 1173 standard to determine their foaming power. It was observed that the formulations of Examples 1 to 5, 11, 13 and 14 exhibited a foam level corresponding to that of a non-foaming detergent composition. The formulations of Examples 6 to 10, and 12 showed stable, dense foam and with small bubbles. These formulations were subjected to a stability test at 5° C, 20° C and 40° C for 8 weeks, and they maintained substantially stable the appearance and pH value.

The compositions were also subjected to stability studies to verify that they showed stable enzymatic activity after a prolonged period of time. To this end, the initial activity of the enzymes and their activity after three weeks at 20° C were measured and it was found that the enzymatic activity was acceptable, since they were substantially better than those of other reference commercial enzymatic combinations.

### Example 15: Tests of antiseptic and disinfectant efficacy

To test the antiseptic and disinfectant efficacy of the components of the composition of the invention, the guidelines of the UNE-EN-13697 standard were followed: Quantitative non-porous surface test for the evaluation of bactericidal and/or fungicidal activity of chemical disinfectants used in food, industrial, domestic and institutional areas. Test method and requirements without mechanical action (phase 2, step 2).

In summary, biofilms were prepared on steel discs of 2 cm diameter cleaned by immersion in a dishwasher, sterilized with 70% isopropanol and dried in a laminar flow cabinet.

The strains of S. *aureus* ATCC 6538 and *L. monocytogenes* CECT 5672 were used for the formation of biofilms.

Various compositions were sprayed on the biofilms, one comprised a combination of mannanase, amylase, protease, and a botanical active ingredient, according to the invention, and other compositions with different types of enzymes and without botanical active ingredient, as shown in the Table II:

**TABLE II**

| Example | Active components |
|---|---|
| Comparative 1 | Protease |
| Comparative 2 | Amylase |
| Comparative 3 | Mannanase |
| Comparative 4 | Protease |
| | Amylase |
| Comparative 5 | Protease |
| | Amylase |
| | Mannanase |
| Comparative 6 | Botanical active ingredient |
| 15 | Protease |
| | Amylase |
| | Mannanase |
| | Botanical active ingredient |

The compositions of this table were adjusted to a pH of 8.5, and were sprayed onto the discs with the biofilm at a temperature of 50° C and they were allowed to act for a time of 15 minutes. Then they were rinsed with water. The tests were carried out three times.

Tables III and IV show the bacteria count, expressed as Log CFU, and the lethality obtained for each of them, also expressed as log CFU:

**TABLE III**

| *S*. *aureus* ATCC 6538 | | | |
|---|---|---|---|
| Example | Mean | Std. dev. | Lethality |
| 15 | **1.00** | **0.77** | **5.63** |
| Comparative 1 | 3.33 | 2.08 | 3.30 |
| Comparative 2 | 3.32 | 2.07 | 3.31 |
| Comparative 3 | 3.15 | 0.00 | 3.48 |
| Comparative 4 | 3.20 | 1.43 | 3.43 |
| Comparative 5 | 3.00 | 1.70 | 3.63 |
| Comparative 6 | 2.22 | 1.33 | 4.41 |

**TABLE IV**

| *L. monocytogenes* CECT 5672 | | | |
|---|---|---|---|
| Example | Mean | Std.dev. | Lethality |
| 15 | **1.53** | **0.80** | **5.10** |
| Comparative 1 | 3.48 | 1.52 | 3.15 |
| Comparative 2 | 3.43 | 1.63 | 3.20 |
| Comparative 3 | 3.21 | 1.29 | 3.42 |
| Comparative 4 | 3.13 | 0.00 | 3.50 |
| Comparative 5 | 3.00 | 2.30 | 3.63 |
| Comparative 6 | 3.30 | 1.23 | 4.07 |

The following controls shown in Table V, expressed in log CFU, were made:

**TABLE V**

| Control | *S*. *aureus* | *L. monocytogenes* |
|---|---|---|
| Hard water | 7.59 | 7.57 |
| Neutralizer | 7.16 | 7.26 |
| Inoculated microorganism | 8.15 | 8.96 |
| Microorganism in the test discs | 6.63 | 7.37 |

The hard water control is the control that verifies that the water, which is used as an interfering agent, does not affect the microorganisms.

The neutralizer control is to verify that the neutralizer is not toxic to microorganisms. The neutralizer was used to prevent residual activity after the evaluation.

Inoculated microorganism is the amount of microorganisms in the working solution.

Microorganism in the test discs is the amount of microorganisms in the test discs that were subjected to the treatment with the compositions.

Lethality corresponds to the difference between the amount of microorganisms in the test discs that were subjected to the treatment with the compositions and the amount of microorganisms that remain in the test discs after the treatment.

From the tests carried out, it follows that the combination of the present invention achieves lethality substantially superior to other compositions that do not contain this combination of mannanase with a botanical active ingredient. When comparing the results of the comparative examples 1 to 6 with Example 15 of the invention, it is clear that the combination of the invention with mannanase and a botanical active ingredient has a synergistic effect in relation to the elimination of biofilm.

### Example 16: Efficacy test

The composition prepared according to Example 11, adjusted to a pH of 8.5, was applied in the form of a 1% by weight aqueous solution on biofilms of *L*. *monocytogenes* formed on steel discs, according to a procedure analogous to that followed in Example 15.

Three washes of 15 minutes each were carried out at a temperature of 55° C and the number of viable cells per cm² was determined. The control contained 5.02 × 106 Cells/cm².

Table VI shows the percentage of *L. monocytogenes* cells detached from the biofilm and the lethality, expressed in Cells/ml, after 1, 2 or 3 washes with the composition of the invention:

**TABLE VI**

| Wash | % Cells detached | Lethality |
|---|---|---|
| 1 | 80.8 | 3.71 × 10⁶ |
| 2 | 73.2 | 3.47 × 10⁶ |
| 3 | 98.4 | 4.82 × 10⁶ |

It is observed that with the composition of the invention practically the total removal of the biofilm is achieved after the third washing, as well as the destruction of practically all the bacteria in suspension.

Thus, the compositions of the invention provide a very high degree of sanitation due to the effective removal of the biofilm.

The combination of various enzymatic effects, surfactants and the botanical active ingredient in the compositions of the invention provide significant advantages in sanitation.

## Claims

1. Detergent composition for the control and removal of biofilm formed on a surface, comprising a combination of enzymes comprising a mannanase, a protease and an α-amylase, **characterized in that** it comprises a botanical active ingredient, which comprises a combination of cineole, pinene, and menthadiene.

2. Composition according to claim 1, **characterized in that** it comprises one or more components selected from the group consisting of: surfactants, adjuvants, cosolvents, hydrotropes, pH regulating agents, and water.

3. Composition according to claim 2, **characterized in that** it comprises one or more surfactants, selected from the group consisting of anionic, non-ionic, amphoteric, and mixtures thereof.

4. Composition according to claim 3, **characterized in that** it comprises an alkyl ether carboxylate as anionic surfactant.

5. Composition according to claim 3, **characterized in that** it comprises an amine oxide as a non-ionic surfactant.

6. Composition according to claim 3, **characterized in that** it comprises a combination of alkyl ether carboxylate and an amine oxide.

7. Composition according to claim 3, **characterized in that** it comprises an adduct of polyol with ethylene oxide and propylene oxide as non-ionic surfactant.

8. Composition according to claim 7, **characterized in that** the polyol is glycerine.

9. Composition according to any of claims 2 to 8, **characterized in that** it comprises an adjuvant comprising at least one sequestering agent.

10. Composition according to claim 9, **characterized in that** the sequestering agent is selected from the group consisting of citric acid, tartaric acid, gluconic acid, EDTA, DTPA, NTA, DTPMP, GLDA and MGDA, their sodium salts; and mixtures thereof.

11. Composition according to claim 10, **characterized in that** the sequestering agent comprises citric acid and the sodium salt of MGDA.

12. Composition according to any of claims 2 to 11, **characterized in that** the cosolvent is selected from the group consisting of propylene glycol, ethanol, n-propanol, isopropanol, n-butanol, glycerine, polyethylene glycol, 3-methoxy-3-methyl-1-butanol, *N,N*-dimethylamides of saturated or unsaturated C₆-C₁₈ fatty acids, esters of glycerine with saturated or unsaturated C₆-C₁₈ fatty acids, and mixtures thereof.

13. Composition according to claim 12, **characterized in that** the cosolvent is a mixture selected from the group consisting of ethanol and isopropanol, propylene glycol and 3-methoxy-3-methyl-1-butanol, ethanol and propylene glycol, and isopropanol and propylene glycol.

14. Composition according to any of claims 2 to 13, **characterized in that** the pH regulating agent comprises a mixture of at least one alkanolamine and a carboxylic acid.

15. Composition according to claim 14, **characterized in that** the pH regulating agent comprises a mixture of at least one alkanolamine and citric acid.

16. Composition according to claim 2, **characterized in that** it comprises:
- between 2% and 20%, preferably between 5% and 15%, and more preferably between 7% and 12% of surfactant,
- between 2% and 15%, preferably between 2% and 15%, more preferably between 3% and 12%, still more preferably between 5% and 10%, and still more preferably between 6% and 9% of adjuvant,
- between 2% and 20%, preferably between 3% and 15%, more preferably between 4% and 12%, and still more preferably between 5% and 10% of cosolvent,
- between 4% and 20%, preferably between 4% and 20%, more preferably between 6% and 18%, and still more preferably between 5% and 10% of pH regulating agent,
- a combination of enzymes comprising a mannanase, a protease and an α-amylase, and
- a botanical active ingredient,
wherein the percentages are expressed by weight of active matter with respect to the total weight of the composition, and
wherein the botanical active ingredient comprises a combination of cineole, pinene, and menthadiene.

17. Use of the composition of any of claims 1 to 16 for the control and removal of biofilm formed on a surface.

## Patentansprüche

1. Waschmittelzusammensetzung zur Steuerung und Entfernung von Biofilm, der auf einer Oberfläche gebildet ist, umfassend eine Kombination von Enzymen umfassend eine Mannanase, eine Protease und eine α-Amylase, **dadurch gekennzeichnet, dass** diese einen botanischen Wirkstoff umfasst, der eine Kombination von Cineol, Pinen und Menthadien umfasst.

2. Zusammensetzung nach Anspruch 1, **dadurch gekennzeichnet, dass** diese eine oder mehrere Bestandteile umfasst, die ausgewählt sind aus der Gruppe bestehend aus: Tensiden, Hilfsstoffen, Co-Lösungsmitteln, Hydrotropika, pH-Wert regulierende Mittel und Wasser.

3. Zusammensetzung nach Anspruch 2, **dadurch gekennzeichnet, dass** sie eine oder mehrere Tenside umfasst, die sind ausgewählt aus der Gruppe bestehend aus anionischen, nichtionischen und Mischungen davon.

4. Zusammensetzung nach Anspruch 3, **dadurch gekennzeichnet, dass** diese ein Aklylethercarboxylat als anionisches Tensid umfasst.

5. Zusammensetzung nach Anspruch 3, **dadurch gekennzeichnet, dass** diese ein Aminoxid als ein nichtionisches Tensid umfasst.

6. Zusammensetzung nach Anspruch 3, **dadurch gekennzeichnet, dass** diese eine Kombination aus einem Aklylethercarboxylat und einem Aminoxid umfasst.

7. Zusammensetzung nach Anspruch 3, **dadurch gekennzeichnet, dass** diese als nichtionisches Tensid ein Addukt von Polyol mit Ethylenoxid und Propylenoxid umfasst.

8. Zusammensetzung nach Anspruch 7, **dadurch gekennzeichnet, dass** das Polyol Glycerin ist.

9. Zusammensetzung nach einem der Ansprüche 2 bis 8, **dadurch gekennzeichnet, dass** diese einen Hilfsstoff umfasst, umfassend mindestens ein Maskierungsmittel.

10. Zusammensetzung nach Anspruch 9, **dadurch gekennzeichnet, dass** das Maskierungsmittel ausgewählt ist aus der Gruppe, bestehend aus Citronensäure, Weinsäure, Gluconsäure, EDTA, DTPA, NTA, DTPMP, GLDA und MGDA, ihren Natriumsalzen; und Mischungen davon.

11. Zusammensetzung nach Anspruch 10, **dadurch gekennzeichnet, dass** das Maskierungsmittel Citronensäure und das Natriumsalz von MGDA umfasst.

12. Zusammensetzung nach einem der Ansprüche 2 bis 11, **dadurch gekennzeichnet, dass** das Co-Lösungsmittel ausgewählt ist aus der Gruppe, bestehend aus Propylenglykol, Ethanol, n-Propanol, Isopropanol, n-Butanol, Glycerin, Polyethylenglykol, 3-Methoxy-3-methyl-1-butanol, *N,N*-Dimethylamiden von gesättigten oder ungesättigten C₆-C₁₈-Fettsäuren, Estern von Glycerin mit gesättigten oder ungesättigten C₆-C₁₈-Fettsäuren und Mischungen davon.

13. Zusammensetzung nach Anspruch 12, **dadurch gekennzeichnet, dass** das Co-Lösungsmittel eine Mischung ist, die ausgewählt ist aus der Gruppe, bestehend aus Ethanol und Isopropanol, Propylenglykol und 3-Methoxy-3-methyl-1-butanol, Ethanol und Propylenglykol und Isopropanol und Propylenglykol.

14. Zusammensetzung nach einem der Ansprüche 2 bis 13, **dadurch gekennzeichnet, dass** das pH-Wert regulierende Mittel eine Mischung aus mindestens einem von Alkanolamin und Carbonsäure ist.

15. Zusammensetzung nach Anspruch 14, **dadurch gekennzeichnet, dass** das pH-Wert regulierende Mittel eine Mischung aus mindestens einem von Alkanolamin und Citronensäure ist.

16. Zusammensetzung nach Anspruch 2, **dadurch gekennzeichnet, dass** diese umfasst:
- zwischen 2 % und 20 %, vorzugsweise zwischen 5 % und 15 % und mehr bevorzugt zwischen 7 % und 12 % Tensid,
- zwischen 2 % und 15 %, vorzugsweise zwischen 2 % und 15 %, mehr bevorzugt zwischen 3 % und 12 %, noch mehr bevorzugt zwischen 5 % und 10 % und noch mehr bevorzugt zwischen 6 % und 9 % Hilfsstoff,
- zwischen 2 % und 20 %, vorzugsweise zwischen 3 % und 15 %, mehr bevorzugt zwischen 4 % und 12 % und noch mehr bevorzugt zwischen 5 % und 10 % Co-Lösungsmittel,
- zwischen 4 % und 20 %, vorzugsweise zwischen 4 % und 20 %, mehr bevorzugt zwischen 6 % und 18 % und noch mehr bevorzugt zwischen 5 % und 10 % des pH-Wert regulierenden Mittels,
- eine Kombination von Enzymen, umfassend eine Mannanase, eine Protease und eine α-Amylase und
- einen botanischen Hilfsstoff,
wobei die Prozentsätze durch das Gewicht der aktiven Substanzen in Bezug auf das Gesamtgewicht der Zusammensetzung ausgedrückt sind, und
wobei der botanische Wirkstoff eine Kombination von Cineol, Pinen und Menthadien umfasst.

17. Verwendung der Zusammensetzung nach einem der Ansprüche 1 bis 16 für die Steuerung und Entfernung von Biofilm, der auf einer Oberfläche gebildet ist.

## Revendications

1. Composition de détergente pour le contrôle et l'élimination du biofilm formé sur une surface, comprenant une combinaison d'enzymes comprenant une mannanase, une protéase et une α-amylase,**caractérisée en ce qu'**elle comprend un principe actif botanique, qui comprend une combinaison de cinéol, pinène et menthadiène.

2. Composition selon la revendication 1, **caractérisée en ce qu'**elle comprend un ou plusieurs composants choisis dans le groupe constitué par : des tensioactifs, des adjuvants, des cosolvants, des hydrotropes, des agents de régulation du pH, et de l'eau.

3. Composition selon la revendication 2, **caractérisée en ce qu'**elle comprend un ou plusieurs tensioactifs, choisis dans le groupe constitué par des anioniques, des non ioniques, des amphotères et des mélanges de ceux-ci.

4. Composition selon la revendication 3, **caractérisée en ce qu'**elle comprend un alkyl éther carboxylate comme tensioactif anionique.

5. Composition selon la revendication 3, **caractérisée en ce qu'**elle comprend un oxyde d'amine comme tensioactif non ionique.

6. Composition selon la revendication 3, **caractérisée en ce qu'**elle comprend une combinaison d'alkyl éther carboxylate et d'un oxyde d'amine.

7. Composition selon la revendication 3, **caractérisée en ce qu'**elle comprend un produit d'addition de polyol avec de l'oxyde d'éthylène et de l'oxyde de propylène comme tensioactif non ionique.

8. Composition selon la revendication 7, **caractérisée en ce que** le polyol est la glycérine.

9. Composition selon l'une quelconque des revendications 2 à 8, **caractérisée en ce qu'**elle comprend un adjuvant comprenant au moins un agent séquestrant.

10. Composition selon la revendication 9, **caractérisée en ce que** l'agent séquestrant est choisi dans le groupe constitué par l'acide citrique, l'acide tartrique, l'acide gluconique, EDTA, DTPA, NTA, DTPMP, GLDA et MGDA, leurs sels de sodium ; et des mélanges de ceux-ci.

11. Composition selon la revendication 10, **caractérisée en ce que** l'agent séquestrant comprend de l'acide citrique et le sel de sodium de MGDA.

12. Composition selon l'une quelconque des revendications 2 à 11, **caractérisée en ce que** le cosolvant est choisi dans le groupe constitué par le propylène glycol, l'éthanol, le *n*-propanol, l'isopropanol, le n-butanol, la glycérine, le polyéthylène glycol, le 3-méthoxy-3-méthyl-1-butanol, des *N,N-*diméthylamides d'acides gras saturés ou insaturés de C₆-C₁₈, des esters de glycérine avec des acides gras saturés ou insaturés de C₆-C₁₈, et les mélanges de ceux-ci.

13. Composition selon la revendication 12, **caractérisée en ce que** le cosolvant est un mélange choisi dans le groupe constitué par l'éthanol et l'isopropanol, le propylène glycol et le 3-méthoxy-3-méthyl-1-butanol, l'éthanol et le propylène glycol, et l'isopropanol et le propylène glycol.

14. Composition selon l'une quelconque des revendications 2 à 13, **caractérisée en ce que** l'agent de régulation du pH comprend un mélange d'au moins une alcanolamine et d'un acide carboxylique.

15. Composition selon la revendication 14, **caractérisée en ce que** l'agent de régulation du pH comprend un mélange d'au moins une alcanolamine et d'un acide citrique.

16. Composition selon la revendication 2, **caractérisée en ce qu'**elle comprend :
- entre 2 % et 20 %, de préférence entre 5 % et 15 %, et de manière plus préférée entre 7 % et 12 % de tensioactif,
- entre 2 % et 15 %, de préférence entre 2 % et 15 %, de manière plus préférée entre 3 % et 12 %, de manière encore plus préférée entre 5 % et 10 %, et de manière encore plus préférée entre 6 % et 9 % d'adjuvant,
- entre 2 % et 20 %, de préférence entre 3 % et 15%, de manière plus préférée entre 4 % et 12 %, et de manière encore plus préférée entre 5 % et 10 % de cosolvant,
- entre 4 % et 20 %, de préférence entre 4 % et 20 %, de manière plus préférée entre 6 % et 18 %, et de manière encore plus préférée entre 5 % et 10 % d'adjuvant,
- une combinaison d'enzymes comprenant une mannanase, une protéase et une α-amylase,et
- un principe actif botanique,
dans laquelle les pourcentages sont exprimés en poids de matière active par rapport au poids total de la composition, et
dans laquelle le principe actif botanique comprend une combinaison de cinéol, pinène et menthadiène.

17. Utilisation de la composition selon l'une quelconque des revendications 1 à 16 pour le contrôle et l'élimination du biofilm formé sur une surface.
